Europäisches Patentamt

European Patent Office

Office européen des brevets

⑩

(11) Publication number: **0 039 170**
**B1**

(12) **EUROPEAN PATENT SPECIFICATION**

(45) Date of publication of patent specification: **30.07.86**

(21) Application number: **81301629.2**

(22) Date of filing: **14.04.81**

(51) Int. Cl.⁴: **H 04 N 1/18**

(54) Copying apparatus.

(30) Priority: **14.04.80 US 140364**
**14.04.80 US 140363**

(43) Date of publication of application:
**04.11.81 Bulletin 81/44**

(45) Publication of the grant of the patent:
**30.07.86 Bulletin 86/31**

(84) Designated Contracting States:
**DE GB IT**

(56) References cited:
**FR-A-2 385 274**
**GB-A- 907 790**
**GB-A-2 010 633**
**US-A-3 586 907**
**US-A-4 268 870**

**PATENTS ABSTRACTS OF JAPAN, vol 4, no. 4
(E-164), page 3 E 164**

(73) Proprietor: **XEROX CORPORATION**
**Xerox Square - 020**
**Rochester New York 14644 (US)**

(72) Inventor: **Fischbeck, Kenneth H.**
**4626 Valley Ridge Road**
**Dallas Texas (US)**
Inventor: **Wright, Allen T.**
**1450 Cheyenne Road**
**Lewisville Texas (US)**
Inventor: **Bain, Lee L.**
**4105 Stonewick Drive**
**Arlington Texas (US)**
Inventor: **Paraskevopoulos, Demetris E.**
**10 Mill Valley**
**Pittsford New York (US)**

(74) Representative: **Goode, Ian Roy et al**
**European Patent Attorney c/o Rank Xerox
Limited Patent Department Rank Xerox House
338 Euston Road
London NW1 3BH (GB)**

EP 0 039 170 B1

Courier Press, Leamington Spa, England.

## Description

This invention relates to a graphic engine, that is to say an apparatus capable of reading graphic information and of marking copy material in accordance with graphic information. The invention is particularly concerned with a graphic engine of the kind comprising an elongate support member for supporting both an array of image-reading elements and an array of image-marking elements, said image-reading elements and said image-marking elements being arranged parallel to the longitudinal axis of said support member; an image-reading station including means for maintaining a document to be read in image-reading relationship to said image-reading elements; an image-marking station including means for maintaining a record-receiving member in image-marking relationship to said image-marking elements; means for suspending and oscillating said support member in spaced relationship to said image-reading station and said image-marking station, and means for providing relative movement between a document to be copied and a record-receiving member and said image-reading station and said image-marking station respectively.

A graphic engine of this kind is described in FR—A—2 385 274. Such graphic engines can be used in copiers, printers, facsimile transceivers and for other uses. The graphic engine of this invention may also be used for those purposes but, for simplicity of understanding, will be described herein as an ink jet copier; however, where appropriate, reference will be made to the other uses. Ink jet systems are known in which an array of ink jets is caused to scan reciprocally across a record-receiving member to form images thereon.

The invention as claimed is intended to provide a very economical and compact graphic engine having low power requirements, and in which frictional forces are reduced to a minimum. The invention provides a graphic engine of the kind specified which is characterised in that said suspending and oscillating means comprises flexure means attached to said support member for allowing oscillating movement of said support member in a direction parallel to said axis of said support member said flexure means being a multiple compounded cantilever spring; and oscillating means connected to said support member for oscillating said support member.

The oscillating support member is supported by resilient mounts that eliminate rolling, sliding or rubbing friction while allowing oscillation in an axial direction only. These mounts minimize the swing or pendulum effect, which would normally cause the oscillating member to move toward and away from a tangentially-aligned fixed surface, such as a record-receiving member, as will be explained further herein. The oscillating member can remain in one location with a document to be copied and a record-receiving member advanced past it; or the document and record-receiving member can remain stationary, and the oscillating member advanced.

Two ways of carrying out the invention are described below with reference to the drawings, in which:

Figure 1 is a perspective view of a simplified graphic engine in accordance with this invention, which shows the relationships of the various components.

Figure 2 is a side-sectional view of the graphic engine of Figure 1 showing in addition a document to be read and a document drive means.

Figure 3 is a side view of a second simplified embodiment of the present invention in which the oscillating image-reading and image-forming support member is advanced, and the document to be read, here a page of a bound volume, and the record-receiving member are held stationary.

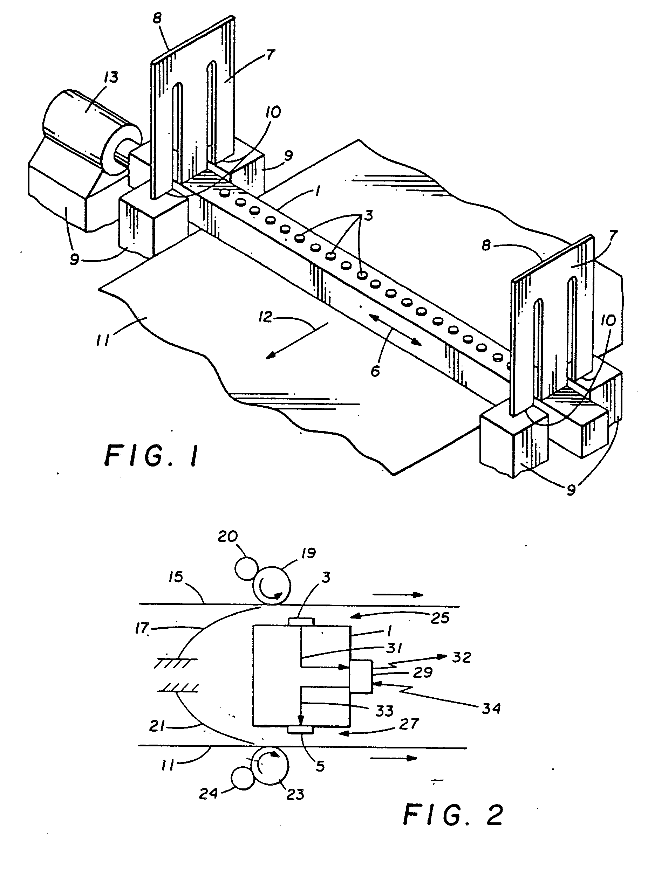

Referring now to Figure 1, there is shown a raster input scan/raster output scan (RIS/ROS) support member 1, which may be, for example, of a plastic material. Supported on RIS/ROS support member 1 are scanning/reading means represented here by circles 3, which may be, by way of example, photodetectors. Also supported on RIS/ROS support member 1 are marking elements 3 (see Figure 2), which, in this exemplary instance, are drop-on-demand ink jets. Conveniently, one marking element can be provided for each reading element; however, this is not necessary. RIS/ROS support member 1 is suspended for axial oscillatory movement in the directions shown by arrow 6 by flexure mounts 7, which act as multiple compounded cantilever springs. Each flexure mount is an E-shaped leaf spring, with the ends of the outer limbs of the 'E' secured to base 9, and with the end of the central limb secured to the support member 1. The flexure mounts 7 being relatively wide minimize sideways movement of support member 1. Further, since the whole flexure mount 7 is resilient not only does support member 1 pivot about the top edge 8 of flexure mount 7, but the top edge 8 of mount 7 pivots about the line of contact 10 between mount 7 and base 9. This double-pivoting action keeps support member 1 in spaced relationship to record-receiving member 11 and document to be read 15 (see Figure 2) during its complete travel better than would result from a single pivot action. The hanging flexure type of mount used here also eliminates any rolling, sliding or rubbing friction that would be present in conventional apparatus. The stiffness of the flexure may also be increased by use of additional springs if desired. The apparatus is also relatively quiet in operation. Support member 1 is oscillated by oscillating means 13, which may be, for example, a solenoid. Solenoid 13 is also fixed to base 9.

In addition to the oscillation of RIS/ROS support member 1, it is necessary to provide relative movement between member 1 and the document to be read 15 (see Figure 2) and/or the record-receiving member 11. The relative movement is at right angles, i.e. orthogonal, as shown by arrow 6, which represents the axial oscillation of RIS/ROS support member 1 and arrow 12, which represents the motion of record-receiving member 11. It should be noted that RIS/ROS support member 1 scans rapidly in comparison with the velocity of movement of document 15 or record-receiving member 11. Typical means for moving document to be read 15 and record-receiving member 11 are shown in Figure 2.

Referring now to Figure 2, which represents a simplified side-sectional view of Figure 1, document 15, which is to be read, is guided by leaf-spring fingers 17 into contact with drive guide roller means 19, which, when driven by motor 20, pulls document 15 across the reading path of photodetectors 3 through image-reading station designated generally as 25. Document 15 and roller 19 are not shown in Figure 1 to simplify understanding of the construction of RIS/ROS support member 1. Leaf-spring fingers 21 are used to guide record-receiving member 11, which may be, for example, paper, into contact with drive guide roller 23. Roller 23 driven by motor 24 guides and pulls record-receiving member 11 through the image-marking station designated generally as 27. Controller 29 is used to receive the input signal 31 from the photodetectors 3 and to produce an output signal 33 to ink jets 5. Controller 29 is conveniently mounted on oscillating RIS/ROS support member 1.

Where the graphic engine is to be used as a copier, a document to be copied 15 and a copy sheet 11 are fed into the nip formed by leaf-spring fingers 17 and drive roller 19 and leaf-spring fingers 21 and drive roller 23, respectively. Solenoid 12 is activated causing RIS/ROS support member 1 to oscillate axially a distance approximately equal to the distance between photodetectors 3 to ensure that all areas of document 15 are read or scanned by photodetectors 3. Drive roller motors 20 and 24 are activated causing rotation of rollers 19 and 23 in such manner that document 15 and record-receiving member 11 are advanced at about the same speed in synchronization. The document 15 and copy 11 may be advanced either stepwise or continuously. As document 15 is advanced, it is scanned by photodetectors 3, which send signals 31 to controller 29. Controller 29 in response to input signals 31 provides output signals 33, which trigger the appropriate ink jets 5. In this manner, a copy is formed on sheet 11 corresponding to the document 15.

Since, according to this invention, the photodetector array 3 and the ink jet marker array 5 are integrally arranged on the same carriage 1, they execute the same motion relative to the copy 11/document 15. Each mark corresponds to a true optical density at its location. However, if the orthogonal motion is constant speed, the locations fall along sine waves and typically would not form a rectangular grid.

In the copying mode, regularity of dot placement may well suffice, and rectangularity of dot placement patterns may not be required. In this event, constant paper 11/document 15 speed may be used. Since corresponding phase points in each sine wave are equally spaced by an integral number of wavelengths, then if the wavelength of the sine wave is made equal to the desired vertical spacing of dots, then dots for any column, which are placed at the same phase point, will be equally spaced from their adjacent dots in the same column. This is most easily done by placing dots only during one direction of dot transport motion. The cost, however, is in jet duty factor. The jets are off during every return half cycle. Duty factor may be restored, however, if the oscillation frequency is doubled and if dots are placed only in alternate columns during each direction of jet transport motion. This corresponds to a horizontal interlace of dots during each half cycle of bar 1 oscillation.

Where the graphic engine of this invention is to be used as a facsimile transmitter, read signals 31 are set by controller 29 in an appropriate form represented by signal 32 to a remote transceiver or printer. Similarly, where the graphic engine of this invention is to be used as a facsimile receiver, a signal 34 received from a remote transmitter, such as another facsimile transceiver, is used to produce signal 33 to control marking elements 5. Where it is desired to use the graphic engine as a printer, obviously signal 34 may be provided from any number of sources includinig computers and electronic word processors.

It can be seen that the apparatus as described can be made relatively inexpensively, can be made compact and has a very low power consumption. The source of ink (not shown) may be located externally to the RIS/ROS support member 1 and connected by one or more flexible tubes (not shown) to ink jets 5. Similarly, the power source to the photocells and the controller is not shown but would be connected by fine wires.

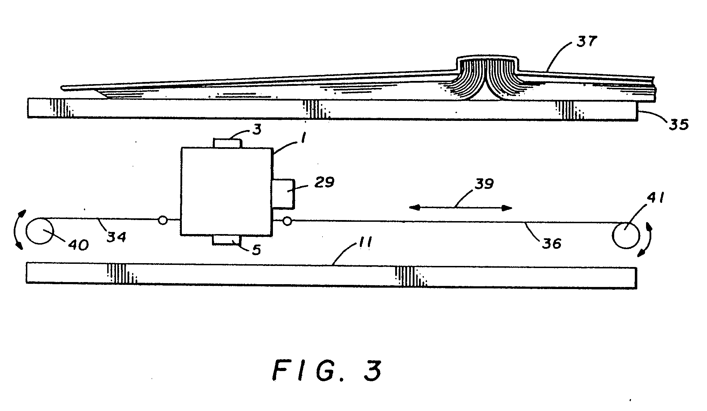

Referring now to Figure 3, there is shown an apparatus for copying from, for example, bound volumes in which the RIS/ROS support member is not only oscillated but is advanced both past the material to be copied and the record-receiving member 11. RIS/ROS support member 1, photodetectors 3, ink jets 5 and controller 29 are suspended and used as described in reference to Figures 1 and 2. Here, however, a platen 35 is provided for supporting bound volume 37. In operation RIS/ROS support member 1 is advanced by cables 34 and 36 wound on drive motors 40 and 41, respectively, which pull support member 1 in either direction as indicated by arrows 39 while photodetectors 3 scan bound volume 37. Ink jets 5 form an image on stationary record-receiving member 11. This apparatus eliminates the requirement for advancing document 15 and copy 11 at the same speed in registration; however, the apparatus is more complex in that obviously the mechanism required to advance RIS/ROS support member 1 is more complicated than the mechanism required to advance two sheets of, for example, paper. The width of the arrays of photodetectors 3 and ink jets 5 is conveniently about the same width as the document desired to be copied.

Relative motion between the marking jets 5 and detectors 3 and the copy 11/document 15 has been described as two dimensional. The higher speed motion is sinusoidal along the array bar 1 axis while lower speed motion in direction 12 is orthogonal to that axis. If the orthogonal motion is constant speed, that the loci of marked/scanned points will be sine waves. If the second motion is intermittent, instantaneous, and if it occurs during each reversal of the first motion, then the loci of marked points will form square waves. If the intermittent motion is generated by a stepper motor 20, 24, and if the jets 5 and detectors 3 are interrupted during the stepping motion, then the loci of marked/scanned points are straight line segments parallel to the array axis. If the amplitude oscillation is great enough, the straight line segments generated by adjacent jets 5 and detectors 3 during their active periods form continuous straight raster scan lines across an entire page.

Although the above disclosure was directed to the use of ink-jet marking, obviously marking elements 5 could be, for example, magnetic, electrostatic, thermal printers or other means in which case record-receiving member 11 would be of a suitable compatible material; for example, heat-sensitive paper would be used if thermal printing were utilized. Ink-jet printing is preferred, however, because it is a non-contact technology with its inherent advantages and has relatively low power requirements.

Although specific components have been disclosed herein, many modifications and variations will occur to those skilled in the art. Such modifications and variations are intended to be included within the scope of the appended claims. For example, the reading elements could be charge couple devices, thin film deposits, magnetic pickups and other well-known devices.

## Claims

1. A graphic engine comprising:
an elongate support member (1) for supporting both an array of image-reading elements (3) and an array of image-marking elements (5), said image-reading elements and said image-marking elements being arranged parallel to the longitudinal axis of said support member;
an image-reading station (25) including means for maintaining a document to be read in image-reading relationship to said image-reading elements (3);
an image-marking station (27) including means for maintaining a record-receiving member in image-marking relationship to said image-marking element (5);
means for suspending and oscillating said support member in spaced relationship to said image-reading station and said image-marking station, and
means for providing relative movement between a document to be copied (15) and a record-receiving member (11) and said image-reading station (25) and said image-marking station (27) respectively; characterised in that said suspending and oscillating means comprises
flexure means (7) attached to said support member for allowing oscillating movement of said support member in a direction parallel to said axis of said support member said flexure means being a multiple compounded cantilever spring; and
oscillating means (9) connected to said support member for oscillating said support member.

2. The graphic engine of claim 1 including means for advancing said support member (1) in a direction perpendicular to said axis.

3. The graphic engine of claim 1 including means for advancing both said document (15) and said record-receiving member (11) in a direction perpendicular to said axis.

4. The graphic engine of any one of claims 1 to 3 wherein said marking elements (5) are drop-on-demand ink jets.

5. The graphic engine of any of claims 1 to 4 wherein said means for axially oscillating the support member (1), includes a resilient mount (7) of E-shape, the outer limbs of which are secured to a frame, and the central limb of which is secured to the support member.

## Patentansprüche

1. Eine graphische Vorrichtung mit:
einem langgestreckten Trägerteil (1) zum Halten einer Anordnung von bildlesenden Elementen (3) und einer Anordnung von bildzeichnenden Elementen (5), welche genannten bildlesenden Elemente und genannten bildzeichnenden Elemente parallel zu der Längsachse des genannten Trägerteils angeordnet sind;
einer bildlesenden Station (25) einschließlich einer Einrichtung zum Halten eines zu lesenden Schriftstücks in bildlesendem Verhältnis zu den genannten bildlesenden Elementen (3);
einer bildzeichnenden Station (27) einschließlich einer Einrichtung zum Halten eines Aufzeichnung-aufnehmenden-Teils in bildzeichnendem Verhältnis zu den genannten bildzeichnenden Elementen (5);
einer Einrichtung zum Aufhängen und Schwingen des genannten Trägerteils in einer Anordnung mit Abstand zur genannten bildlesenden Station und genannten bildzeichnenden Station; und
einer Einrichtung zum Ermöglichen einer relativen Bewegung zwischen einem zu kopierenden Schriftstück (15) sowie einem Aufzeichnung-aufnehmenden-Teil (11) und der genannten bildlesenden Station (25) bzw. der genannten bildzeichnenden Station (27); dadurch gekennzeichnet, daß die genannte Aufhängungs- und Schwingeinrichtung umfaßt
eine an dem genannten Trägerteil befestigte biegebewegliche Einrichtung (7) zum Ermöglichen einer Schwingbewegung des genannten Trägerteils in einer Richtung parallel zur genannten Achse des genannten Trägerteils, wobei die genannte biegebewegliche Einrichtung eine mehrfache zusammengesetzte Auslegerfeder ist, und

eine mit dem genannten Trägerteil verbundene Schwingeinrichtung (9) zum Schwingen des genannten Trägerteils.

2. Die graphische Vorrichtung nach Anspruch 1 mit einer Einrichtung zum Vorwärtsbewegen des genannten Trägerteils (1) in einer zur genannten Achse senkrechten Richtung.

3. Die graphische Vorrichtung nach Anspruch 1 mit einer Einrichtung zum Vorwärtsbewegen sowohl des genannten Schriftstücks (15) als auch des genannten Aufzeichnung-aufnehmenden-Teils (11) in einer zur genannten Achse senkrechten Richtung.

4. Die graphische Vorrichtung nach einem der Ansprüche 1 bis 3, in welcher die genannten zeichnenden Elemente (5) Tropfen-bei-Bedarf-abgebende-Tintendüsen sind.

5. Die graphische Vorrichtung nach einem oder einigen der Ansprüche 1 bis 4, in welcher die genannte Einrichtung zum axialen Schwingen des Trägerteils (1) eine elastische Lagerung (7) von E-Form aufweist, deren äußere Arme an einem Rahmen befestigt sind und deren mittlerer Arm an dem Trägerteil befestigt ist.

**Revendications**

1. Moteur graphique comprenant:

— un élément de support allongé (1) pour supporter un réseau d'éléments de lecture d'image (3) ainsi qu'un réseau d'éléments de marquage d'image (5), ces éléments de lecture d'image et ces éléments de marquage d'image étant disposés parallèlement à l'axe longitudinal de l'élément de support;

— un poste de lecture d'image (25) comportant un moyen pour maintenir un document devant être lu en relation de lecture d'image avec les éléments de lecture d'image (3);

— un poste de marquage d'image (27) comportant un moyen pour maintenir un élément de réception d'enregistrement dans une relation de marquage d'image avec les éléments de marquage d'image (5);

— un moyen pour suspendre et faire osciller l'élément de support en relation espacée avec le poste de lecture d'image et le poste de marquage d'image, et

— moyen pour conférer un mouvement relatif entre un document devant être reproduit (15) et un élément de réception d'enregistrement (11) et le poste de lecture d'image (25) et le poste de marquage d'image (27), respectivement; caractérisé en ce que le moyen de suspension et d'oscillation comprend:

— un moyen de flexion (7) fixé à l'élément de support pour permettre le mouvement oscillant de l'élément de support dans une direction parallèle à l'axe de l'élément de support, ce moyen de flexion étant un ressort en porte-à-faux combiné multiple; et

— un moyen oscillant (9) connecté à l'élément de support pour faire osciller cet élément de support.

2. Moteur graphique selon la revendication 1, comprenant un moyen pour faire avancer l'élément de support (1) dans une direction perpendiculaire audit axe.

3. Moteur graphique selon la revendication 1, comprenant un moyen pour faire avancer le document (15) ainsi que l'élément de réception d'enregistrement (11) dans une direction perpendiculaire audit axe.

4. Moteur graphie selon l'une quelconque des revendications 1 à 3, où les éléments de marquage (5) sont des jets d'encre à gouttes à la demande.

5. Moteur graphique selon l'une quelconque des revendications 1 à 4, où le moyen pour l'oscillation axiale de l'élément de support (1) comprend une monture élastique (7) en forme de E dont les branches extérieures sont fixées à un châssis, et la branche centrale est fixée à l'élément de support.

FIG. 1

FIG. 2

FIG. 3